(19) **Europäisches Patentamt
European Patent Office
Office européen des brevets**

(11) **EP 1 205 734 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(51) Int Cl.:
*G01D 5/20* (2006.01)

(21) Anmeldenummer: **01117317.6**

(22) Anmeldetag: **18.07.2001**

(54) **Messverfahren für eine Mechatronik**

Measuring method for a mechatronic device

Méthode de mesure d'un dispositif mécatronique

(84) Benannte Vertragsstaaten:
**DE FR GB IT**

(30) Priorität: **14.10.2000 DE 10051048**

(43) Veröffentlichungstag der Anmeldung:
**15.05.2002 Patentblatt 2002/20**

(60) Teilanmeldung:
**03014904.1 / 1 353 152**

(73) Patentinhaber: **WABCO GmbH
30453 Hannover (DE)**

(72) Erfinder: **Sohn, Robert
30559 Hannover (DE)**

(74) Vertreter: **Schrödter, Manfred et al
WABCO GmbH
Postfach 91 12 62
30432 Hannover (DE)**

(56) Entgegenhaltungen:
**EP-A- 0 945 709      DE-A1- 3 343 885
US-A- 4 859 942**

**Beschreibung**

Die Erfindung bezieht sich auf ein Meßverfahren für eine Mechatronik gemäß dem Oberbegriff des Patentanspruchs 1.

Eine derartige Mechatronik ist beispielsweise aus der DE-A 100 22 124 bekannt. Sie enthält in einem gemeinsamen Gehäuse, das beispielsweise aus Aluminium bestehen kann, eine Elektronik und ein elektromechanisches Bauteil, beispielsweise ein Magnetventil. Die Elektronik ist mechanisch auf einer Leiterplatte aufgebaut, die sich in einem besonderen Abteil des Mechatronik-Gehäuses befindet. Auf der Leiterplatte sind in bekannter Weise elektronische Bauelemente (Widerstände, Kondensatoren, Transistoren, Mikrocontroller) aufgelötet. Zu den elektronischen Bauelementen können auch Sensoren gehören, die beispielsweise Wege, Drücke oder Temperaturen messen können.

Aus der DE-A 33 43 885 ist ein induktiver Wegsensor bekannt, der aus einer Spule mit einem wegabhängig verschiebbaren Kern besteht. Der jeweils eingestellte Weg wird zu diskreten Zeitpunkten dadurch ermittelt, daß die Spule mit einem Spannungssprung angeregt wird und der sich dabei entwickelnde Ladestrom beobachtet wird. Dabei ist die jeweilige Induktivität ein Maß für den Weg. Bei der bekannten Anordnung wird die Spule von einem Mikrocontroller angestoßen und die Aufladezeit der Spule von demselben Mikrocontroller in den zu messenden Weg umgerechnet.

Aus der US-PS 4,859,942 ist ein Schaltkreis zur Messung der Verschiebung eines beweglichen Eisenkernes relativ zu einer Magnetspule bekannt. Hierzu wird die Induktivität der Spule an eine konstante Stromquelle angeschlossen. Anschließend wird der Strom abgeschaltet, und die Entladezeit des Stromes gemessen. Hieraus wird die Induktivität der Spule bestimmt. Die Schrift enthält keinen Hinweis auf durch magnetische Störstrahlung verursachte Probleme.

Schließlich ist aus der EP 0 945 709 A1 ein Verfahren zur Bestimmung der Position eines induktiven Wegsensors bekannt, bei welchem die Spule des Wegsensors mit Spannungsimpulsen beaufschlagt wird. Die Zeit Δt vom Beginn des Spannungsimpulses bis zum Erreichen eines vorgegebenen Stromwertes und die erreichte Stromamplitude werden registriert und ausgewertet. Auch hier findet sich kein Hinweis auf Probleme durch magnetische Störfelder.

Bei einer Mechatronik, welche ein magnetisch zu betätigendes Bauteil, wie z. B. ein Magnetventil, ein Relais, oder einen Stellmagneten enthält, besteht die Gefahr, daß durch elektromagnetische Koppelungen ein in der Elektronik enthaltener induktiver Sensor durch die o. g. elektromechanischen Bauteile gestört werden kann. Insbesondere kann die Meßspannung des induktiven Sensors durch magnetisch induzierte Störspannungen beeinflußt werden. Dadurch können die sich ergebenden Sensorwerte verfälscht werden. Daneben sind auch Störungen bzw. Beeinflussungen durch elektrische Felder möglich.

Es ist zwar bekannt, induktive Sensoren gegen Fremdfelder abzuschirmen (DE-A 196 24 801), solche Maßnahmen bedeuten jedoch einen erhöhten Aufwand.

Der Erfindung liegt die Aufgabe zugrunde, in einer Mechatronik mit eingebautem Sensor die oben beschriebenen Störungsmöglichkeiten mit geringem Aufwand zu verhindern oder mindestens abzumildern.

Diese Aufgabe wird durch die im Patentanspruch 1 enthaltene Erfindung gelöst. Die Unteransprüche enthalten zweckmäßige Weiterbildungen.

Die Erfindung wird im folgenden anhand einer Zeichnung näher erläutert.

Diese zeigt in

Fig. 1      eine schematische Darstellung einer Mechatronik mit einem Magnetventil und einer Elektronik mit Wegsensor in einem gemeinsamen Gehäuse, und in

Fig. 2      zwei Diagramme mit der Sensorspannung und der Magnetventilansteuerung über der Zeit.

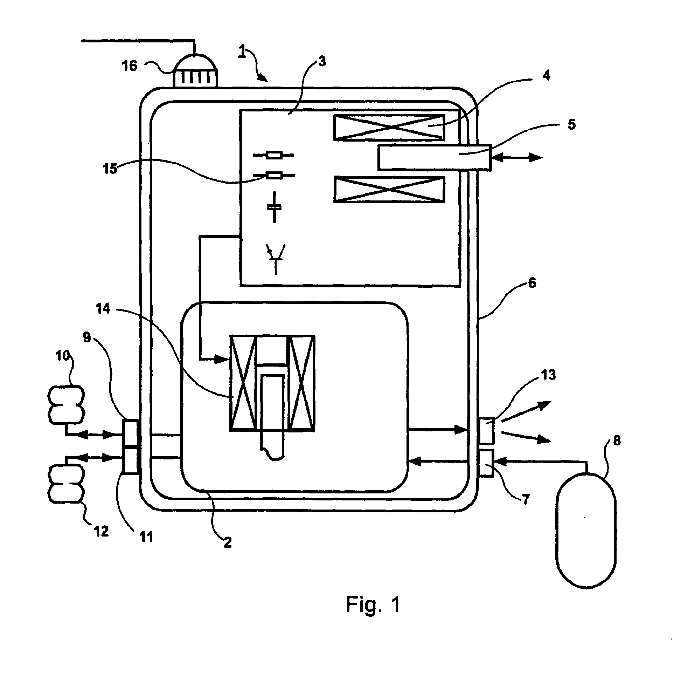

Die Fig. 1 zeigt in schematischer Darstellung eine sogenannte Mechatronik (1), welche in einem gemeinsamen Gehäuse (6) mechanische Bauteile, hier ein Magnetventil (2), sowie eine Elektronik (3) enthält. Im dargestellten Ausführungsbeispiel dient die Mechatronik (1) zur Niveauregulierung in einem Kraftfahrzeug. Hierzu ist an einem ersten Druckanschluß (7) ein Druckluftvorrat (8) angeschlossen. An einem zweiten Druckanschluß (9) ist eine erste Luftfeder (10) angeschlossen. An einem dritten Druckanschluß (11) ist eine zweite Luftfeder (12) angeschlossen. Die beiden Luftfedern (10, 12) sind zwischen einer Achse und dem Aufbau eines Nutzfahrzeugs angeordnet, und dienen sowohl zur Abfederung als auch zur Einstellung bzw. zur Konstanthaltung des Abstandes (Niveaus) zwischen Achse und Aufbau.

Über einen vierten Druckanschluß (13) kann das Magnetventil (2) bei Bedarf Druckluft ins Freie ablassen.

Das Magnetventil (2) enthält eine oder mehrere Magnetspulen (14), mit Hilfe derer ein oder mehrere Ventil-Schließglieder (nicht dargestellt) betätigt werden können.

Die Elektronik (3) enthält elektronische Bauelemente (15), wie z. B. Widerstände, Kondensatoren, oder Mikroprozessoren. Weiter enthält die Elektronik (3) einen oder mehrere Wegsensoren (4, 5), mit welchen beispielsweise der Abstand zwischen der Fahrzeugachse und dem - Aufbau gemessen werden kann.

Im vorliegenden Fall ist der Wegsensor in an sich bekannter Weise als induktiver Wegsensor ausgebildet mit einer Spule (4) und einem in der Spule verschiebbaren Kern (5).

Die Mechatronik (1) weist schließlich noch einen elektrischen Anschluß (16) auf, über den die Betriebsspannung für die Elektronik (3) und das Magnetventil (2) sowie Steuerbefehle zuführbar sind.

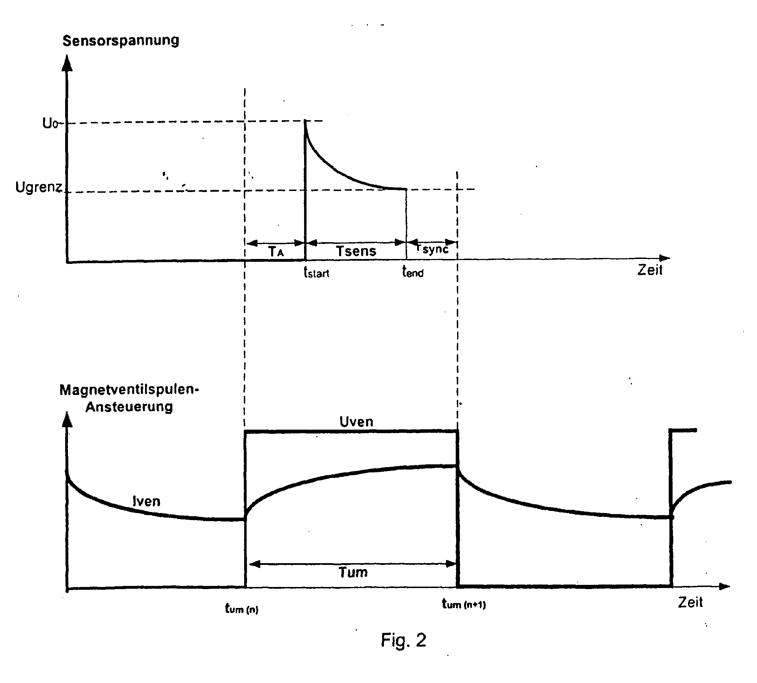

Die elektrische Auswertung des Wegsensors (4, 5) bzw. der Meßvorgang erfolgt zu diskreten Zeitpunkten und ist in der Fig. 2 (oben) näher dargestellt. Zu einem beliebigen Zeitpunkt ($t_{Start}$) wird über einen Vorwiderstand ein Spannungssprung in Höhe von $U_0$ auf die Induktivität bzw. Spule (4) des Sensors gegeben. Nach einer Zeit $T_{sens}$ fällt die Spulenspannung auf einen vorgegebenen Grenzwert ($U_{grenz}$) ab. Diese Zeit wird von einem Mikrocontroller, der auch den Spannungssprung ($U_0$) erzeugt, gemessen und in den Weg des Spulenkerns (5) umgerechnet. Die Zeit $T_{sens}$ und damit die Induktivität der Spule (4) ist ein Maß für den Weg des Kerns (5). Ein typischer Wert für $T_{sens}$ ist 500 - 600 µs.

In der Fig. 2 (unten) ist die Ansteuerung der Magnetventilspule (14) über der Zeit dargestellt. Die Spule wird von einem Schaltregler (Zweipunkt-Regler) angesteuert, der zwischen $t_{um(n)}$ und $t_{um(n+1)}$ rechteckförmige Spannungsimpulse der Höhe $U = U_{ven}$ erzeugt, zwischen denen Zeitspannen mit $U = 0$ liegen. Die Periodendauer der Schaltfrequenz beträgt etwa 2,5 ms entsprechend 400 Hz. Die Phasen mit $U = U_{ven}$ und $U = 0$ sind in der Fig. 2 etwa gleich lang dargestellt, können aber auch von unterschiedlicher Dauer sein.

Hieraus ergibt sich ein Spulenstrom ($I_{ven}$), welcher in den Einschaltphasen nach Art einer e-Funktion ansteigt und in den Abschaltphasen nach Form einer e-Funktion abfällt. Auf diese Weise ergibt sich ein mittlerer Strom, der ausreicht, um ein entsprechendes Ventilglied gegen die Kraft einer Feder in einem angezogenen Zustand zu halten (nicht dargestellt). Zum Abschalten des Magnetventils wird die Spannung $U_{ven}$ dauerhaft auf Null gestellt.

Obwohl die Achsen der Spulen (4 und 14) der Mechatronik (1) gemäß Fig. 1 rechtwinklig zueinander angeordnet sind, hat sich in Versuchen herausgestellt, daß trotzdem die Spule (4) des Wegsensors (4, 5) durch magnetische Einflüsse der Spule (14) des Magnetventils (2) gestört werden kann. Diese Störung ist dann besonders hoch, wenn die Stromänderung in der Magnetspule (14) ihren maximalen Wert hat. Dies ist zu Zeiten der Umschaltung des o. g. Schaltreglers (Zeitpunkte $t_{um}$) der Fall. Ebenso ist dies der Fall in den Einschalt- bzw. Abschaltzeitpunkten des Magnetventils (2) (nicht dargestellt).

Um die oben beschriebene Störung des Sensors (4, 5) durch die Magnetspule (14) zu verringern, wird erfindungsgemäß ein Meßvorgang des Sensors (4, 5) nicht zu einem beliebigen Zeitpunkt durchgeführt, sondern in ein Zeitfenster ($t_{Start}$ bis $t_{End}$) gelegt, in welchem das elektromagnetische Bauteil (2) (Magnetventil) nicht bestromt ist, oder eine Stromänderung im Bauteil (2) unter einem vorgegebenen Grenzwert liegt.

Durch diese Maßnahme werden die Meßvorgänge in Zeitabschnitte gelegt, in welchen eine transformatorische Beeinflussung zwischen den Spulen (14 und 4) wegen der minimalen Stromänderung in der Spule (14) besonders gering ist.

Zweckmäßig wird der Startzeitpunkt ($t_{Start}$) der Laufzeitmessung so gelegt, daß der Endzeitpunkt ($t_{End}$) der Laufzeitmessung um eine vorgegebene Zeitspanne ($T_{sync}$) (Synchronisationszeit) vor einem Umschaltzeitpunkt ($t_{um}$) des elektromagnetischen Bauteils (2) liegt. Dabei ist die Zeitspanne ($T_{sync}$) so vorgegeben, daß ein ausreichender Sicherheitsabstand zum nächsten Umschaltzeitpunkt ($t_{um}$) der Magnetventilspule (14) bleibt. Ein typischer Wert für die Zeitdauer $T_{sync}$ ist 400 µs.

Um die Zeitspanne bzw. Synchronisationszeit $T_{sync}$ mit Sicherheit einhalten zu können, wird zweckmäßig der Abstand $T_A$ des Startzeitpunktes ($t_{Start}$) einer Laufzeitmessung von einem Umschaltzeitpunkt $t_{um}$ berechnet nach der Formel

$$T_A = T_{um} - T_{sync} - T_{sens}.$$

Hierin bedeuten

$T_{um} =$ Einschaltphase des elektromagnetisch betätigten Bauteils (2)

$T_{sync} =$ Synchronisationszeit

$T_{sens} =$ Sensorlaufzeit der vorherigen Messung.

Zur Auswertung der o. g. Formel ist es notwendig in der Elektronik (3), beispielsweise in einem Mikrocontroller, die gemessenen Sensorlaufzeiten ($T_{sens}$) zu speichern, damit die Sensorlaufzeit der vorherigen Messung für die Auswertung der obenstehenden Formel zur Verfügung steht.

Da die Zeitpunkte $t_{um}$ leicht sensierbar sind, z. B. durch Strommessung, kann dann der Mikrocontroller einen Meßvorgang entsprechend die Zeitspanne $T_A$ später starten.

Schließlich ist es zweckmäßig, daß während einer Ansteuerphase des elektromagnetisch betätigten Bauteils (2), also zwischen den Zeitpunkten ($t_{um}$) in Fig. 2 (unten), keine Temperatur-Kompensations-Messungen und -Berechnungen für den Sensor (4, 5) durchgeführt wird.

Dies ist deswegen von Vorteil, weil hierfür ein eingeschwungener Zustand des Sensors abgewartet werden sollte.

## Patentansprüche

1. Meßverfahren für eine Mechatronik (1) mit mindestens einem elektromagnetisch betätigten Bauteil (2) und mit einer eingebauten Elektronik (3) mit mindestens einem induktiven Sensor (4, 5), mit einem Messvorgang, bei dem der Sensor (4, 5) mittels einer Laufzeitmessung ($T_{sens}$) der Auf- oder Entladung seiner Induktivität ausgewertet wird, **dadurch gekennzeichnet,**

**daß** der Meßvorgang des Sensors (4, 5) in ein Zeitfenster (t$_{start}$ bis t$_{End}$) gelegt wird, in dem das Bauteil (2) nicht bestromt ist oder eine Stromänderung im Bauteil (2) unter einem vorgegebenen Grenzwert liegt.

2. Verfahren nach Anspruch 1,
   **dadurch gekennzeichnet,**
   **daß** das elektromagnetisch betätigbare Bauteil (2) ein Magnetventil ist.

3. Verfahren nach Anspruch 1 bis 2,
   **dadurch gekennzeichnet,**
   **daß** der Sensor (4, 5) ein induktiver Weg- oder Winkelsensor ist.

4. Verfahren nach Anspruch 1,
   **dadurch gekennzeichnet,**
   **daß** der Startzeitpunkt (t$_{Start}$) der Laufzeitmessung so gelegt wird, daß der Endzeitpunkt (t$_{End}$) der Laufzeitmessung um eine vorgegebene Zeitspanne (T$_{sync}$) (Synchronisationszeit) vor einem Umschaltzeitpunkt (t$_{um}$) des elektromagnetisch betätigten Bauteils (2) liegt.

5. Verfahren nach Anspruch 4,
   **dadurch gekennzeichnet,**
   **daß** der Abstand (T$_A$) des Startzeitpunktes (t$_{start}$) einer Laufzeitmessung von einem Umschaltzeitpunkt (t$_{Um}$) berechnet wird nach der Formel

$$T_A = \quad T_{Um}\text{-}T_{Sync}\text{-}T_{Sens}.$$

Mit

T$_{um}$ = Einchaltphase des elektromagnetisch betätigten Bauteils (2)
T$_{sync}$ = Synchronisationszeit
T$_{sens}$ = Sensorlaufzeit der vorherigen Messung.

6. Verfahren nach einem oder mehreren der Ansprüche 1 bis 5,
   **dadurch gekennzeichnet,**
   **daß** während einer Einschaltphase des elektromagnetisch betätigten Bauteils (2) keine Temperatur-Kompensations-Berechnung oder -Messung für den Sensor (4, 5) durchgeführt wird.

**Claims**

1. Measurement method for a mechatronics arrangement (1) having at least one electromagnetically actuated component (2) and having a built-in electronics unit (3) having at least one inductive sensor (4, 5), using a measuring process in which the sensor (4, 5) is read by means of a run-time measurement (T$_{sens}$) for the charging or discharging of its inductance,
   **characterised in that**
   the measuring process of the sensor (4, 5) is put into a time window (t$_{start}$ to t$_{end}$) in which there is no current flowing through the component (2) or in which a change in current in the component (2) lies below a predetermined threshold value.

2. Method according to claim 1,
   **characterised in that**
   the electromagnetically actuable component (2) is a solenoid valve.

3. Method according to claim 1 or 2,
   **characterised in that**
   the sensor (4, 5) is an inductive displacement or angle sensor.

4. Method according to claim 1,
   **characterised in that**
   the start time-point (t$_{start}$) of the run-time measurement is so placed that the end time-point (t$_{end}$) of the run-time measurement precedes a switch-over time-point (t$_{um}$) of the electromagnetically actuated component (2) by a predetermined time period (T$_{sync}$) (synchronisation time).

5. Method according to claim 4,
   **characterised in that**
   the spacing (T$_A$) of the start time-point (t$_{start}$) of a run-time measurement from a switchover time-point (t$_{um}$) is calculated in accordance with the formula

$$T_A \ = \ T_{um}\text{-}T_{sync}\text{-}T_{sens},$$

wherein

T$_{um}$ = switch-on phase of the electromagnetically actuated component (2)
T$_{sync}$ = synchronisation time
T$_{sens}$ = sensor run-time of the previous measurement.

6. Method according to one or more of claims 1 to 5,
   **characterised in that**
   no temperature-compensation calculation or temperature-compensation measurement is carried out for the sensor (4, 5) during a switch-on phase of the electromagnetically actuated component (2).

**Revendications**

1. Procédé de mesure pour un dispositif mécatronique (1) comportant au moins un composant actionné électromagnétiquement (2) et une électronique intégrée (3) comportant au moins un capteur inductif (4, 5), avec un processus de mesure, dans lequel le capteur (4, 5) est évalué au moyen d'une mesure du temps de propagation ($T_{sens}$) de la charge ou de la décharge de son inductivité,
**caractérisé en ce que**
le processus de mesure du capteur (4, 5) est situé dans une fenêtre de temps ($t_{start}$ à tend), dans laquelle le composant (2) n'est pas alimenté en courant ou un changement de courant dans le composant (2) se trouve en dessous d'une valeur limite prédéterminée.

2. Procédé selon la revendication 1, **caractérisé en ce que** le composant pouvant être actionné électromagnétiquement (2) est une électrovanne.

3. Procédé selon la revendication 1 à 2, **caractérisé en ce que** le capteur (4, 5) est un capteur de déplacement ou angulaire inductif.

4. Procédé selon la revendication 1, **caractérisé en ce que** le moment de départ ($t_{start}$) de la mesure de temps de propagation est déterminé de sorte que le moment de fin ($t_{End}$) de la mesure de temps de propagation se trouve approximativement à un moment prédéterminé ($T_{Sync}$) (temps de synchronisation) avant un moment de commutation ($t_{Um}$) du composant actionné électromagnétiquement (2).

5. Procédé selon la revendication 4, **caractérisé en ce que** la distance ($T_A$) entre le moment de départ ($t_{start}$) d'une mesure de temps de propagation et un moment de commutation ($t_{um}$) est calculée selon la formule

$$T_A = T_{um} - T_{Sync} - T_{Sens}.$$

Avec
$T_{um}$ = phase d'enclenchement du composant actionné électromagnétiquement (2)
$T_{sync}$ = temps de synchronisation
$T_{sens}$ = temps de capteur de la mesure précédente.

6. Procédé selon l'une ou plusieurs des revendications 1 à 5, **caractérisé en ce que**, pendant une phase d'enclenchement du composant actionné électromagnétiquement (2), aucun calcul ou mesure de compensation de température pour le capteur (4, 5) n'est effectué.

Fig. 1

Sensorspannung

$U_0$

$U_{grenz}$

$T_A$  Tsens  Tsync

$t_{start}$  $t_{end}$  Zeit

Magnetventilspulen-
Ansteuerung

Uven

Iven

Tum

$t_{um (n)}$  $t_{um (n+1)}$  Zeit

Fig. 2

EP 1 205 734 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10022124 A
- DE 3343885 A
- US 4859942 A
- EP 0945709 A1
- DE 19624801 A